# EUROPEAN PATENT SPECIFICATION

(11) **EP 1 962 298 B1**
(45) Date of publication and mention of the grant of the patent: **18.06.2014**
(21) Application number: 08003080.2
(22) Date of filing: 20.02.2008
(51) Int. Cl.: H01F 5/04, H01F 27/28

(54) **Coil unit and electronic instrument**
Spuleneinheit und elektronisches Instrument
Unité de bobine et instrument électronique

(30) Priority: 20.02.2007 JP 2007039890; 20.12.2007 JP 2007328245
(43) Date of publication of application: 27.08.2008
(73) Proprietor: Seiko Epson Corporation, Shinjuku-ku, Tokyo 163-0811 (JP)
(72) Inventor: Kondo, Yoichiro, Suwa-shi Nagano-ken 392-8502 (JP); Okada, Hirofumi, Suwa-shi Nagano-ken 392-8502 (JP)
(74) Representative: MERH-IP Matias Erny Reichl Hoffmann

(56) References cited:
- JP-A- 2003 153 457
- JP-A- 2006 042 519
- JP-A- 2006 115 592
- JP-A- 2006 339 329
- US-A- 3 798 059
- US-A1- 2002 067 237
- US-A1- 2003 020 583
- US-A1- 2006 222 821
- US-B1- 6 392 525

## Description

### BACKGROUND OF THE INVENTION

The present invention relates to a coil unit relating to non-contact power transmission using a coil, an electronic instrument, and the like.

Non-contact power transmission which utilizes electromagnetic induction to enable power transmission without metal-to-metal contact has been known. As application examples of non-contact power transmission, charging a portable telephone, a household appliance (e.g., telephone handset), and the like has been proposed.

In power transmission utilizing electromagnetic induction, the amount of deviation of a coil from the coaxial line affects the amount of power transmission to a large extent. Therefore, it is important that a charging target be placed at an appropriate position of a charger. The following technologies have been proposed in order to appropriately position the charging target with respect to the charger.

JP-A-6-311659 discloses technology which prevents insertion of a foreign object between a charging target and a charger so that charging occurs at an appropriate position.

JP-A-7-322534 discloses electromagnetic coupling technology in which a protruding core is inserted into an air-core solenoid coil.

JP-A-6-303726 discloses technology which produces primary/secondary electromagnetic coupling by inserting a primary-side core into an air-core section of a secondary-side coil.

In the above technologies, the core is provided in the coil.

US 2003/020583 disclosed a design for coreless printed circuit board transformers, for operation in power transfer applications in which shielding is provided by a combination of ferrite plates and thin copper sheets.

US 2006222821 A1 disclosed a composite substrate capable of suppressing a deformation of the substrate in response to the influence of internal stress of a conductive film is provided. When a conductive film is formed on a substrate, the conductive film is formed so as to have a laminated structure including a main conductive film which has a tensile stress FT as its internal stress F 1 and a sub-conductive film which has a compressive stress FC as its internal stress F 2.In this manner, the tensile stress FT of the main conductive film is offset by use of the compressive stress FC of the sub-conductive film.

USA3798059 disclosed a thick film inductor suitable for hybrid integrated circuits comprising successive layers of powdered sintered ferromagnetic material in a cured catalyst-hardenable resin binder and a pattern of conductors comprising powdered metal in a cured catalyst-hardenable resin.

### SUMMARY

An Aspect of the invention is to provide a thin coil unit which enables an increase in power transmission efficiency.

This object of the invention is achieved by the subject-matter according to the independent claim 1. The dependent claims refer to preferred embodiments of the invention.

According to another aspect of the invention, there is provided an electronic instrument comprising the above coil unit.

### BRIEF DESCRIPTION OF THE SEVERAL VIEWS OF THE DRAWING

FIG 1 is a view showing a first embodiment having a charger and a portable telephone horizontally placed on the charger.
FIG 2 is an oblique view showing a coil unit.
FIGS. 3A and 3B are cross-sectional views schematically showing a cross section of a coil unit along a line V11-V11 shown in FIG. 2.
FIG. 4 is an exploded oblique view showing a coil unit.
FIG. 5 is an exploded oblique view showing another example of a coil unit.
FIG. 6 is a view showing the relationship between a receiving section of a printed circuit board and a lead line.
FIG. 7 is an exploded oblique view showing a further example of a coil unit.
FIG. 8 is an exploded oblique view showing a coil unit having a coil-receiving housing.
FIG. 9 is an exploded oblique view showing the coil unit shown in FIG. 8 at a different angle.
FIG. 10 is a view schematically showing a first manufacturing step of the coil unit shown in FIG. 8.
FIG. 11 is a view schematically showing a second manufacturing step of the coil unit shown in FIG. 8.
FIG. 12 is a view schematically showing a third manufacturing step of the coil unit shown in FIG. 8.
FIG 13 is a view schematically showing a fourth manufacturing step of the coil unit shown in FIG. 8.

### DETAILED DESCRIPTION OF THE EMBODIMENT

According to one embodiment of the invention, there is provided a coil unit according to claim 1.

According to another embodiment of the invention, there is provided an electronic instrument comprising one of the above coil unit.

Preferred embodiments of the invention are described in detail below. Note that the embodiments described below do not in any way limit the scope of the invention defined by the claims laid out herein. Note that all elements of the embodiments described below should not necessarily be taken as essential requirements for the invention.

### 1. Charging system

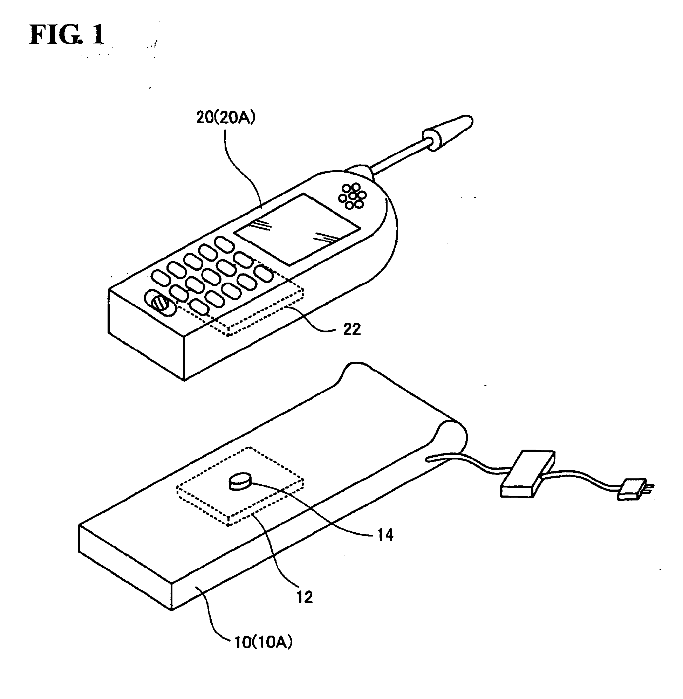

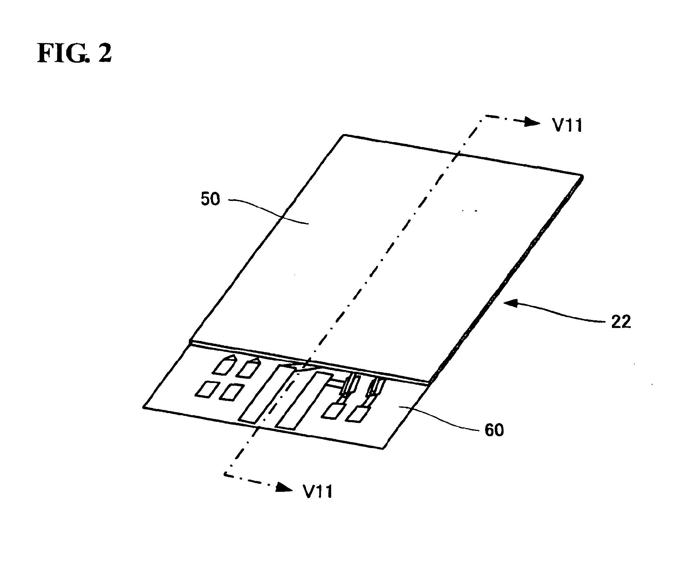

FIGS. 1 and 2 are views schematically showing a charging system including a charger 10 and an electronic instrument (e.g., portable telephone 20) which is charged using the charger 10. FIG 1 shows a portable telephone 20A which is horizontally placed on a charger 10A. The portable telephone 20A is charged using the charger 10A by non-contact power transmission utilizing electromagnetic induction which occurs between a coil of a coil unit 12 of the charger 10A and a coil of a coil unit 22 of the portable telephone 20A.

The portable telephone 20A is placed on the charger 10A in a state in which a positioning depression (positioning target section in a broad sense) (not shown in FIG. 1) is positioned with respect to a positioning protrusion 14 (positioning section in a broad sense) of the charger 10A. Since the portable telephone 20A is placed on the charger 10A while positioning the positioning depression with respect to the positioning protrusion 14, the portable telephone 20A can be placed on the charger 10A at an appropriate position, whereby transmission efficiency can be increased.

The opposite sides of the coil units 12 and 22 through which the coil units 12 and 22 perform non-contact power transmission as shown in FIG. 1 are referred to as transmission sides. In FIG. 1, the upper side of the coil unit 12 is the transmission side, and the lower side of the coil unit 22 is the transmission side. The side opposite to the transmission side is referred to as a non-transmission side.

### 2. Structure of coil unit

### 2.1 Coil unit in which coil inner end lead line is provided over transmission side

The coil units 12 and 22 are described in detail below taking the thin coil unit 22 suitable for the portable telephone 20 as an example.

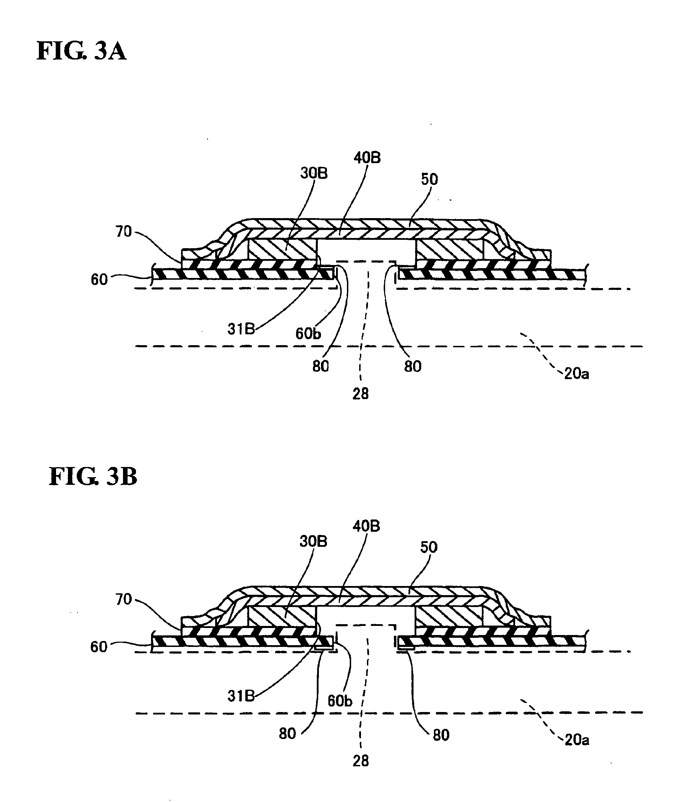

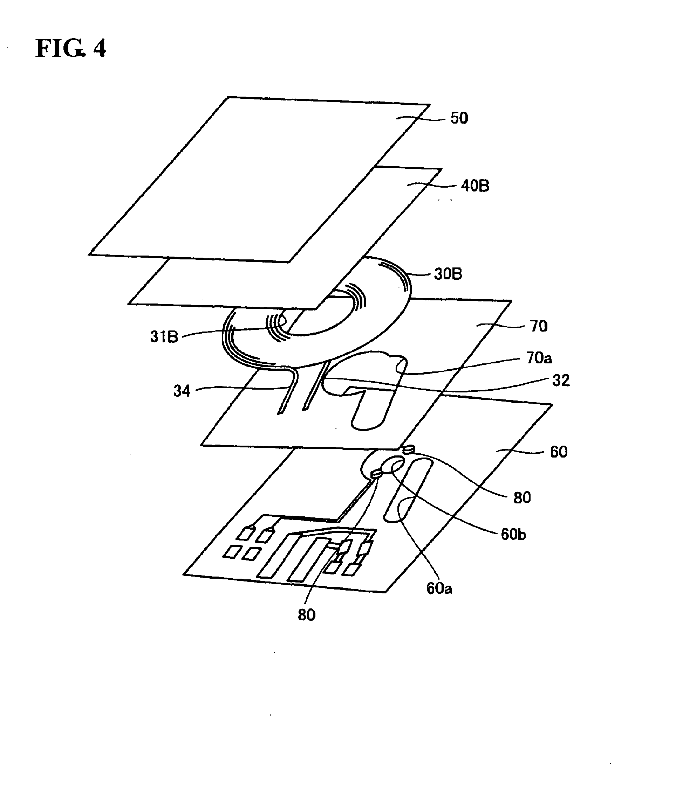

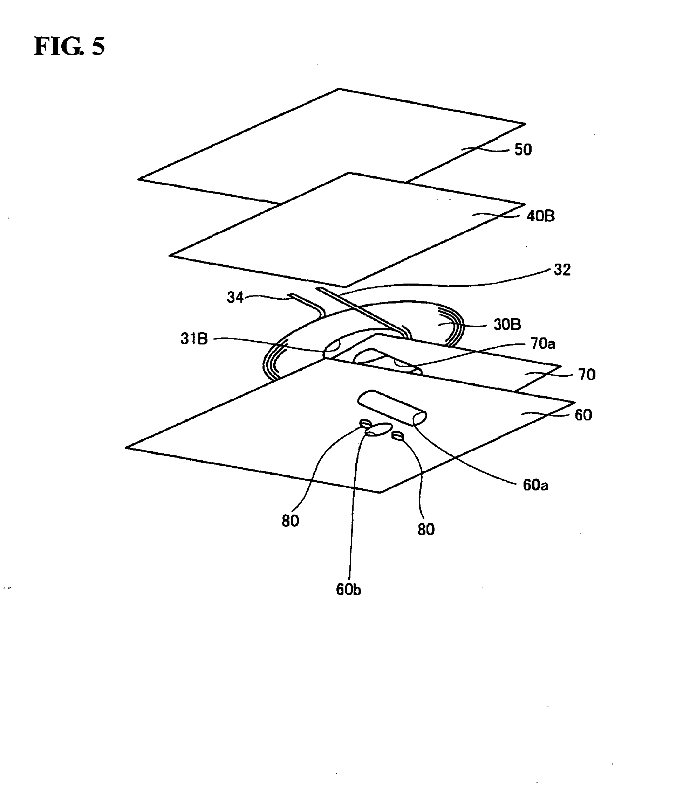

FIG. 2 is an oblique view showing the coil unit 22. FIGS. 3A and 3B are cross-sectional views schematically showing two types of coil units 22 along the line V11-V11 shown in FIG. 2. FIGS. 4 and 5 are exploded oblique views showing the coil units 22 shown in FIGS. 3A and 3B.

The coil unit 22 includes a planar air-core coil 30B, a magnetic sheet 40B, and a magnetic flux leakage prevention member 50 provided in that order on the side of a printed circuit board (e.g., flexible circuit board) 60 opposite to the side which faces a housing 20a through a double-sided tape 70.

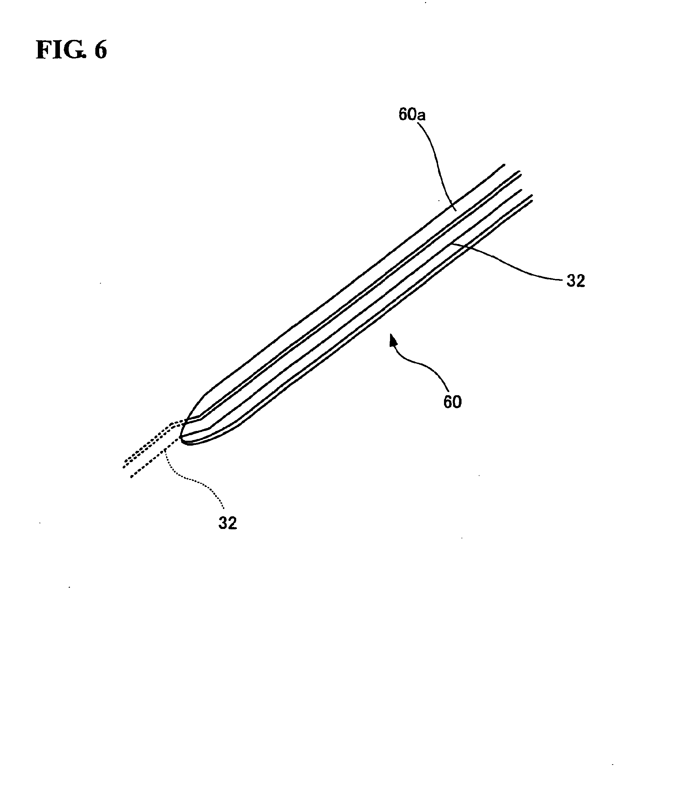

As shown in FIGS. 4 and 5, the planar air-core coil 30B has a lead line 32 which connects or withdraws the inner end of the planar air-core coil 30B over the transmission side. A lead line 34 connects or withdraws the outer end of the planar air-core coil 30B. Placement sections 60a and 70a which receive the lead line 32 are respectively formed (cut) in the double-sided tape 70 and the printed circuit board 60 disposed on the side of the coil on which the lead line 32 is provided. The receiving sections 60a and 70a are formed of long holes, for example. As shown in FIG 6, the lead line 32 is placed in the receiving section 60a when viewed from the printed circuit board 60. The lead line 32 does not increase the thickness of the coil unit 22 or the degree to which the lead line 32 increases the thickness of the coil unit 22 can be reduced by placing the lead line 32 in the receiving sections 60a and 70a.

As shown in FIGS. 4 and 5, a through-hole 60b is formed in the printed circuit board 60 at a position corresponding to an air-core section 31B of the planar air-core coil 30B. The diameter of the through-hole 60b is set to be smaller than the diameter of the air-core section 31B of the planar air-core coil 30B. A temperature detection section 80 (e.g., thermistor) is provided on the side of the printed circuit board 60 which faces the planar air-core coil 30B (example shown in FIGS. 3A and 4) or the side of the printed circuit board 60 opposite to the side which faces the planar air-core coil 30B (example shown in FIGS. 3B and 5) inside the air-core section 31B. The temperature of a foreign object which enters the space between the charger 10 and the portable telephone 20 can be detected by providing the temperature detection section 80 inside the air-core section 31B. In particular, a foreign object which is positioned near the air-core section 31B having a high magnetic flux density produces a considerable amount of heat due to eddy current. The temperature of the foreign object can be accurately detected by providing the temperature detection section 80.

The side surface of the magnetic sheet 40B may be covered with the magnetic flux leakage prevention member 50, as shown in FIGS. 3A and 3B. This prevents corrosion of the magnetic sheet 40B or scattering of a magnetic powder due to breakage of the magnetic sheet or the like.

The magnetic sheet 40B of the portable telephone 20 may be formed to be larger than the external shape of a planar air-core coil 30A of the charger 10. This prevents a situation in which a chargeable battery provided in the coil unit 22 or a metal of the circuit board undergoes eddy current loss, whereby power transmission efficiency can be increased.

### 2.2 Coil unit in which coil inner end lead line is provided over non-transmission side

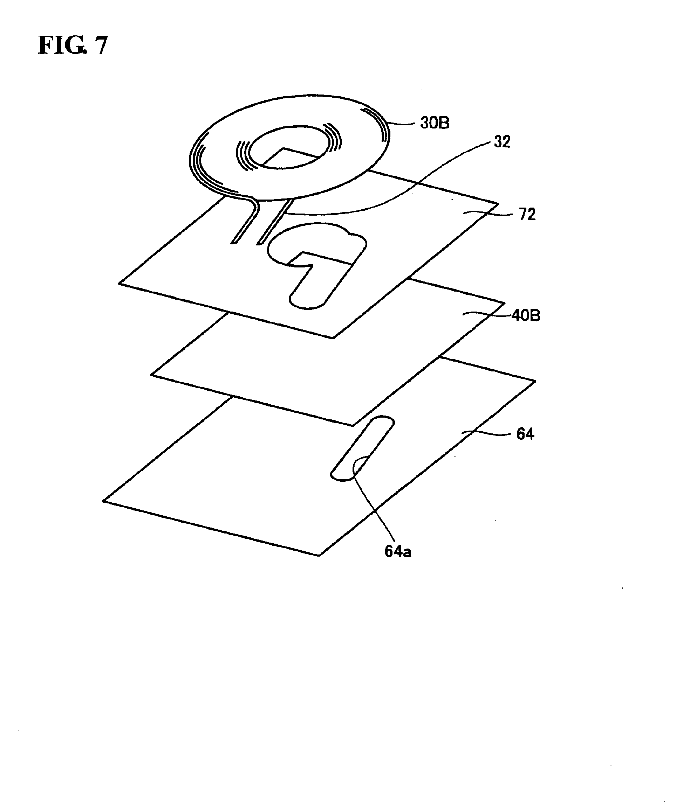

FIG. 7 is an exploded oblique view showing a second configuration example. This configuration example illustrates the case of providing the lead line 32 of the inner end of the planar air-core coil 30B on the non-transmission side opposite to the transmission side (housing side).

As shown in FIG. 7, the magnetic sheet 40B is provided on the non-transmission side (lower side in FIG. 7) of the planar air-core coil 30B opposite to the transmission side through a double-sided tape 72. A printed circuit board 64 is provided under the magnetic sheet 40B. Specifically, when the side of the magnetic sheet 40B which comes into contact with the planar air-core coil 30B is referred to as a first side, the printed circuit board 64 comes into contact with a second side of the magnetic sheet 40B. A receiving section (through-hole or depression) 64a is formed in the printed circuit board 64 at a position corresponding to the lead line 32. The thickness of the lead line 32 can be absorbed by the receiving section 64a through deformation of the magnetic sheet 40B by forming the receiving section 64a.

According to the structure shown in FIG. 7, since the planar air-core coil 30B is disposed so that the transmission side of the planar air-core coil 30 faces the inner surface of the housing of the portable telephone 20, the distance between the primary coil unit 12 and the secondary coil unit 22 is reduced as compared with the above example so that transmission efficiency may be increased. Moreover, the planar air-core coil 30B can be positioned with respect to the housing by placing a positioning protrusion which protrudes from the inner surface of the housing of the portable telephone 20 in the air-core section of the planar air-core coil 30B. In this case, it is unnecessary to form a positioning through-hole in the printed circuit board 64.

### 2.3 Coil unit having coil-receiving housing

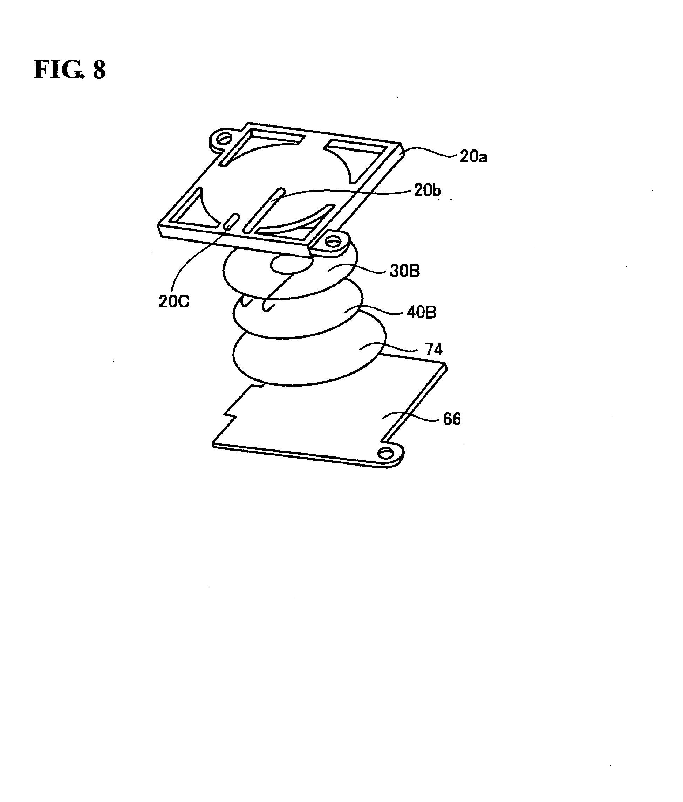

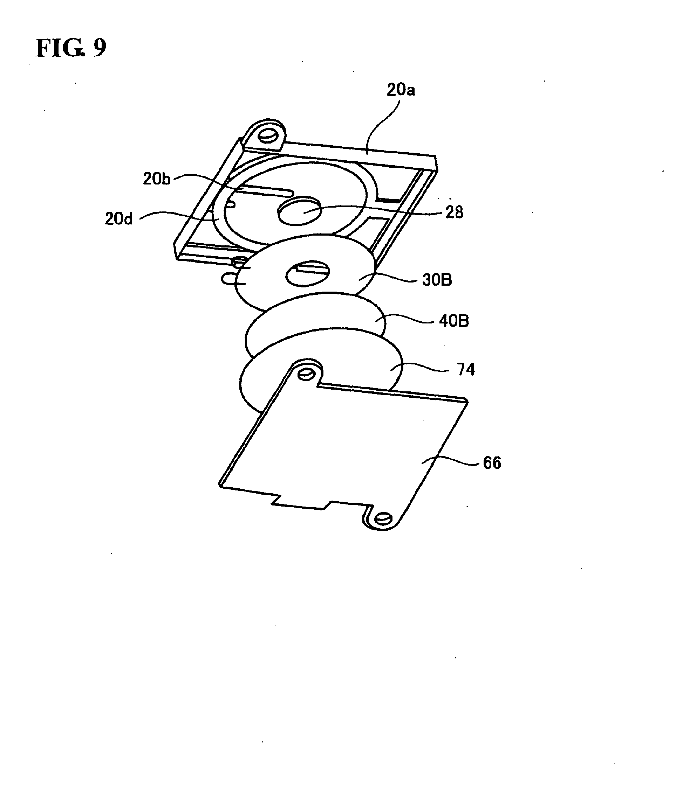

FIGS. 8 and 9 are exploded oblique views showing a coil unit which includes part of the housing 20a of the portable telephone 20 shown in FIG. 1 as a coil-receiving housing at different angles. The coil-receiving housing forms part of the external housing of the charger 10 or the electronic instrument 20. The outer surface of the external housing is flush with the outer surface of the coil-receiving housing. This configuration example shown in FIGS. 8 and 9 illustrates the case of providing the lead line 32 of the inner end of the planar air-core coil 30B on the transmission side (housing side). Note that the lead line 32 of the inner end of the planar air-core coil 30B may be provided on the non-transmission side (magnetic sheet side).

As shown in FIGS. 8 and 9, the planar air-core coil 30B, the magnetic sheet 40B, and a one-sided tape 74 are provided between the coil-receiving housing 20a and a printed circuit board 66. In this embodiment, the magnetic sheet 40b is not an indispensable element. The coil-receiving housing 20a has a receiving section 20b which receives the lead line 32 of the inner end of the planar air-core coil 30B, and a receiving section 20c which receives the lead line 34 of the outer end of the planar air-core coil 30B. The lead line 32 of the inner end of the coil is pulled out to the side opposite to the transmission side and is connected to the printed circuit board 66.

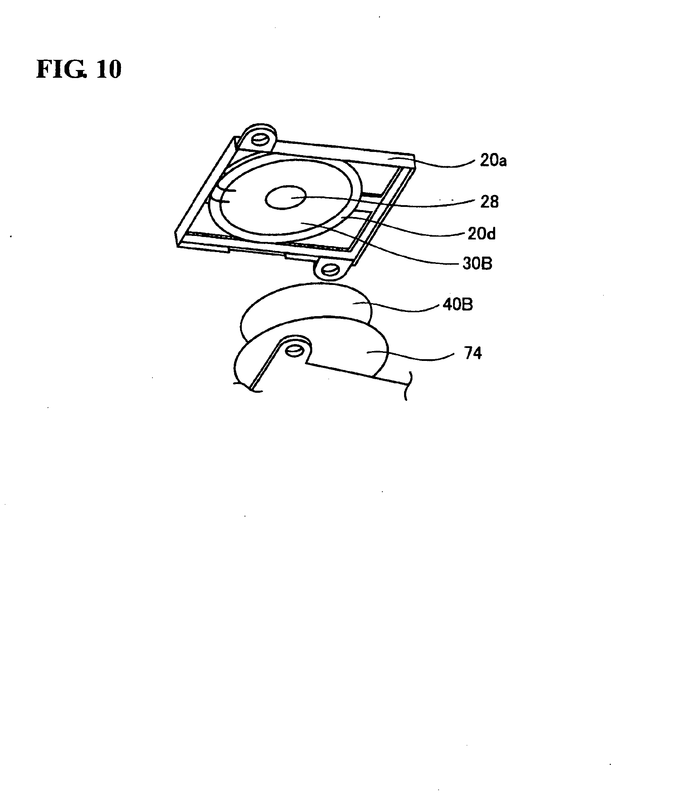

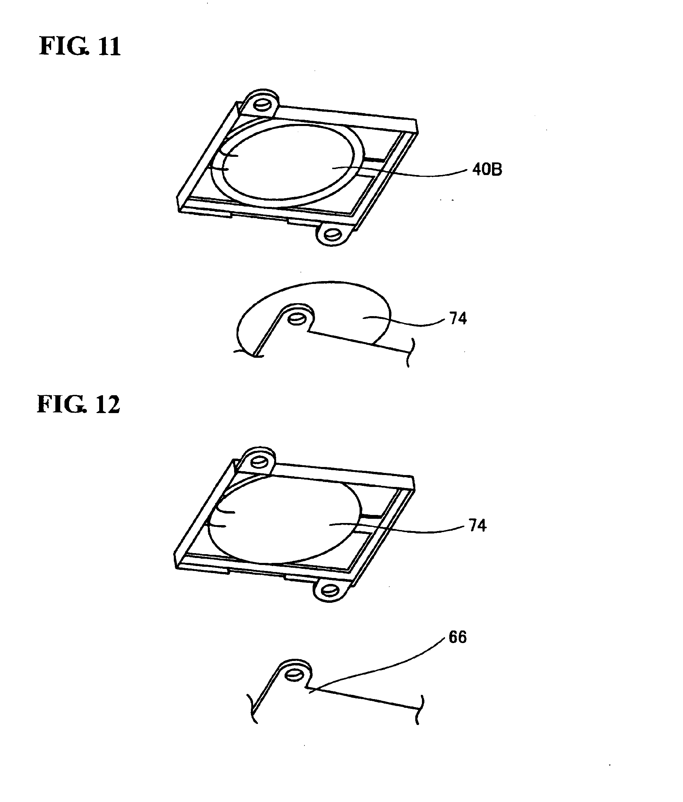

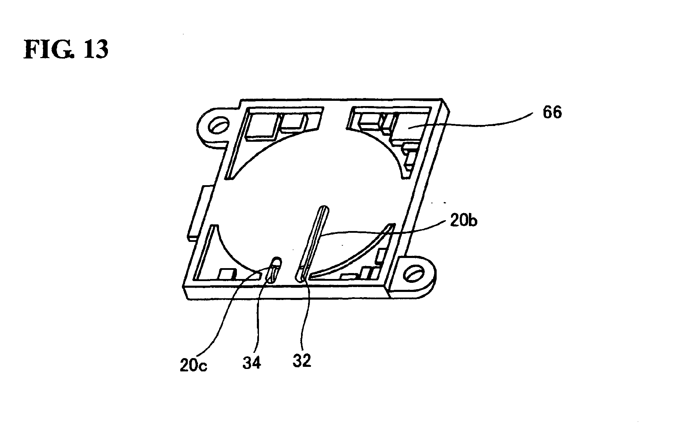

FIGS. 10 to 13 are views schematically showing a process of manufacturing the coil unit. As shown in FIG. 10, the planar air-core coil 30B is placed inside a ring-shaped rib 20d of the coil-receiving housing 20a. The planar air-core coil 30B is positioned utilizing a positioning protrusion 28 provided on the coil-receiving housing 20a. As shown in FIG. 11, the magnetic sheet 40B is attached to the planar air-core coil 30B so that the magnetic sheet 40B is positioned over the planar air-core coil 30B. As shown in FIG. 12, the magnetic sheet 40B is covered with the one-sided tape 74 so that a soft magnetic metal powder does not fall onto the printed circuit board provided under the magnetic sheet 40B from the outer edge of the magnetic sheet 40B. As shown in FIG. 13, the printed circuit board 66 is attached. The receiving sections 20b and 20c formed in the housing 20a are sealed with an adhesive or a molding material in order to prevent the material (soft magnetic metal powder) for the magnetic sheet from leaking through the receiving sections 20b and 20c.

According to this structure, a situation in which the coil is unwound or deformed during transportation or incorporation of the coil can be prevented as compared with the coil unit shown in FIGS. 2 to 7, whereby deformation of the coil which may adversely affect electrical properties such as inductance can be prevented.

The structures shown in FIGS. 2 to 13 may also be applied to the coil unit 12 of the charger 10.

### Application example of electronic instrument

The above embodiments may be applied to an electronic instrument which performs power transmission or signal transmission. For example, the above embodiments may be applied to a charging target including a secondary battery (e.g., wristwatch, electric toothbrush, electric shaver, cordless telephone, personal handyphone, mobile personal computer, personal digital assistant (PDA), or power-assisted bicycle) and a charger.

The above embodiments have been described taking an example relating to non-contact power transmission. Note that the invention may be similarly applied to non-contact signal transmission utilizing an electromagnetic induction principle.

## Claims

1. A coil unit comprising:
a planar air-core coil (30B) that has an air-core section (31 B);
a printed circuit board (60) that is disposed on a first side of the planar air-core coil (30B); and
a magnetic sheet (40B) that is disposed on a second side of the planar air-core coil (30B), the second side being opposite to the first side,
the planar air-core coil (30B) including a lead line (32) connected to an inner end of the planar air-core coil over the first side; and
the printed circuit board (60) including a receiving section (60a) that is formed by cutting the printed board (60) and receives the lead line (32) therein.

2. The coil unit as defined in claim 1,
the printed circuit board (60) including a through-hole (60b) that faces the air-core section (31 B) of the planar air-core coil (30B).

3. The coil unit as defined in claim 2,
a diameter of the through-hole (60b) that is formed in the printed circuit board (60) being smaller than a diameter of the air-core section (31 B) of the planar air-core coil (30B); and
the coil unit further including a temperature detection section (80) that is provided on a side of the printed circuit board (60) that is placed over the planar air-core coil (30B), the temperature detection section (80) being provided at a position that is near the through-hole (60b) and inside an edge of the air-core section (31 B).

4. The coil unit as defined in claim 2,
the coil unit further including a temperature detection section that is provided on a side of the printed circuit board opposite to a side that is placed over the planar air-core coil, the temperature detection section being provided at a position on a periphery of the through-hole.

5. The coil unit as defined in any one of claims 1 to 4,
the receiving section (60a) being a long hole that penetrates the printed circuit board (60).

6. An electronic instrument comprising a housing that receives the coil unit as defined in any one of claims 1 to 5,
the housing of the electronic instrument including a coil positioning protrusion that is formed on an inner surface of the housing, the coil positioning protrusion being inserted into the air-core section of the planar air-core coil through the through-hole that is formed in the printed circuit board to position the planar air-core coil.

7. The electronic instrument as defined in claim 6,
the housing of the electronic instrument including a positioning target section that determines a position of a charger.

## Patentansprüche

1. Spuleneinheit, die umfasst:
eine ebene Luftkernspule (30B), die einen Luftkernabschnitt (31B) besitzt;
eine Leiterplatte (60), die auf einer ersten Seite der ebenen Luftkernspule (30B) angeordnet ist; und
eine Magnetfolie (40B), die auf einer zweiten Seite der ebenen Luftkernspule (30B) angeordnet ist, wobei die zweite Seite der ersten Seite gegenüberliegt,
wobei die ebene Luftkernspule (30B) eine Führungsleitung (32) umfasst, die mit einem inneren Ende der ebenen Luftkernspule (30B) über der ersten Seite verbunden ist; und
die Leiterplatte (60) einen Aufnahmeabschnitt (60a) umfasst, der durch Schneiden der Leiterplatte (60) gebildet ist und die Führungsleitung (32) in sich aufnimmt.

2. Spuleneinheit nach Anspruch 1,
wobei die Leiterplatte (60) ein Durchgangsloch (60b) umfasst, dass dem Luftkernabschnitt (31B) der ebenen Luftkernspule (30B) zugewandt ist.

3. Spuleneinheit nach Anspruch 2,
wobei ein Durchmesser des Durchgangslochs (60b), das in der Leiterplatte (60) ausgebildet ist, kleiner ist als der Durchmesser des Luftkernabschnitts (31B) der ebenen Luftkernspule (30B); und
die Spuleneinheit ferner einen Temperaturdetektionsabschnitt (80) umfasst, der auf einer Seite der Leiterplatte (60) vorgesehen ist, die über der ebenen Luftkernspule (30B) angeordnet ist, wobei der Temperaturdetektionsabschnitt (80) an einer Stelle vorgesehen ist, die nahe dem Durchgangsloch (60b) und innerhalb eines Rands des Luftkernabschnitts (31B) liegt.

4. Spuleneinheit nach Anspruch 2,
wobei die Spuleneinheit ferner einen Temperaturdetektionsabschnitt umfasst, der auf einer Seite der Leiterplatte vorgesehen ist, die über der ebenen Luftkernspule angeordnet ist, wobei der Temperaturdetektionsabschnitt an einer Stelle auf einem Umfang des Durchgangslochs vorgesehen ist.

5. Spuleneinheit nach einem der Ansprüche 1 bis 4,
wobei der Aufnahmeabschnitt (60a) ein Langloch ist, das die Leiterplatte (60) durchdringt.

6. Elektronisches Instrument, das ein Gehäuse umfasst, das die Spuleneinheit nach einem der Ansprüche 1 bis 5 aufnimmt,
wobei das Gehäuse des elektronischen Instruments eine Ausstülpung zur Spulenpositionierung aufweist, die an einer inneren Oberfläche des Gehäuses ausgeformt ist, wobei die Ausstülpung zur Spulenpositionierung in den Luftkernabschnitt der ebenen Luftkernspule durch das Durchgangsloch, das in die Leiterplatte (60) geformt ist, eingesetzt wird, um die ebene Luftkernspule zu positionieren.

7. Elektronisches Instrument nach Anspruch 6,
wobei das Gehäuse des elektronischen Instruments einen Positionierungszielabschnitt umfasst, der die Position eines Ladegeräts bestimmt.

## Revendications

1. Unité de bobine comprenant :
une bobine à air plane (30B) qui présente une section dont le noyau est rempli d'air (31B) ;
une carte à circuits imprimés (60) qui est disposée sur un premier côté de la bobine à air plane (30B) ; et
une feuille magnétique (40B) qui est disposée sur un second côté de la bobine à air plane (30B), le second côté étant opposé au premier côté, la bobine à air plane (30B) incluant une ligne d'alimentation (32) connectée à une extrémité intérieure de la bobine à air plane par-dessus le premier côté ; et
la carte à circuits imprimés (60) incluant une section de réception (60a) qui est formée en coupant la carte à circuits imprimés (60) et qui reçoit la ligne d'alimentation (32) à l'intérieur.

2. Unité de bobine selon la revendication 1,
dans laquelle la carte à circuits imprimés (60) inclut un trou traversant (60b) qui fait face vers la section à noyau rempli d'air (31B) de la bobine à air plane (30B).

3. Unité de bobine selon la revendication 2,
dans laquelle un diamètre du trou traversant (60b) qui est formé dans la carte à circuits imprimés (60) est plus petit qu'un diamètre de la section à noyau rempli d'air (31B) de la bobine à air plane (30B) ; et
l'unité de bobine inclut en outre une section de détection de température (80) qui est prévue sur un côté de la carte à circuits imprimés (60) qui est placé par-dessus la bobine à air plane (30B), la section de détection de température (80) étant prévue à une position qui est proche du trou traversant (60b) et à l'intérieur d'une bordure de la section à noyau rempli d'air (31B).

4. Unité de bobine selon la revendication 2,
dans laquelle l'unité de bobine inclut en outre une section de détection de température qui est prévue sur un côté de la carte à circuits imprimés opposé à un côté qui est placé par-dessus la bobine à air plane, la section de détection de température étant prévue à une position sur une périphérie du trou traversant.

5. Unité de bobine selon l'une quelconque des revendications 1 à 4, dans laquelle la section de réception (60a) est un trou allongé qui pénètre dans la carte à circuits imprimés (60).

6. Instrument électronique comprenant un boîtier qui reçoit l'unité de bobine telle que définie dans l'une quelconque des revendications 1 à 5, le boîtier de l'instrument électronique incluant une projection de positionnement de bobine qui est formée sur une surface intérieure du boîtier, la projection de positionnement de bobine étant insérée dans la section à noyau rempli d'air de la bobine à air plane à travers le trou traversant qui est formé dans la carte à circuits imprimés pour positionner la bobine à air plane.

7. Instrument électronique selon la revendication 6,
dans lequel le boîtier de l'instrument électronique inclut une section de cible de positionnement qui détermine une position d'un chargeur.
